# EUROPEAN PATENT SPECIFICATION

(11) **EP 1 650 070 B1**
(45) Date of publication and mention of the grant of the patent: **03.12.2008**
(21) Application number: 04025269.4
(22) Date of filing: 25.10.2004
(51) Int. Cl.: B60K 5/12, F16F 15/02

(54) **Method for controlling an adjustable engine mount and adjustable engine mount**
Verfahren zum Einstellen einer Motorlagerung und einstellbare Motorlagerung
Méthode d'ajustement d'un support de moteur réglable et support de moteur réglable

(43) Date of publication of application: 26.04.2006
(73) Proprietor: Ford Global Technologies, LLC, Dearborn, MI 48126 (US)
(72) Inventor: Olof Bane Erik, 41131 Göteborg (SE); Göran Sjöstrand, 41678 Göteborg (SE)
(74) Representative: Mossmark, Anders Lennart

(56) References cited:
- DE-A1- 2 916 616
- DE-A1- 3 441 592
- DE-A1- 10 233 783
- GB-A- 2 314 400
- US-A- 4 802 648

## Description

### TECHNICAL FIELD

The invention relates to an adjustable engine mount for reducing oscillations of a drive unit in a vehicle body, wherein the engine mount is provided with at least one adjustable tie bar which is controlled as a function of control signals of an electronic control unit.

### BACKGROUND ART

An engine mount for supporting a drive motor, for example, on a motor vehicle frame is known from German Offenlegungsschrift No. 34 41 592, which describes an engine mount having a damping characteristic that is variable during operation. While the support function and the resiliency of this engine mount is attained by means of a rubber element, a hydraulic damping action is turned on and off by subjecting the pressure chamber of the mount to either overpressure or negative pressure from an external air source or vacuum source. The alternation from a damped to an undamped operating state and vice versa is performed automatically via an electronic control unit as a function of predetermined parameters.

Given the great number of factors that affect the motions of the engine suspended in the motor vehicle, however, a two-point control of this kind is capable of providing sufficient suppression of engine vibrations only under a limited range of operating conditions. In other operating conditions, sacrifices in terms of the comfort of the ride must be accepted, as a consequence of vibration of the drive unit that is transmitted to the vehicle frame.

An adjustable engine mount for shielding a vehicle body from oscillations of a drive unit, in which the magnitude of the damping and of the spring rate is controlled as a function of control signals of a control unit, is known from US 4 802 648. For adjusting the damping, the engine mount has an actuating device, by means of which the size of a throttle cross section between a first chamber and a second chamber of a damping chamber can be adjusted. For adjusting the spring rate, the engine mount has an air cushion which functions like a pneumatic spring element, which can be inflated and vented via a valve device. An engine mount of this type is fairly slow and is only capable of providing suppression of transferred forces over a limited range of operating conditions. Consequently the solution is mainly used for damper units.

The rotational movement or vibration of the engine is generally termed power train rotation, which rotation is limited by available space in the engine bay and by driveability demands. An example of allowable power train rotation is an angle of approximately ±5°. This angle limits the available deflection of the rubber bushings provided for standard tie bars, causing power noise when driving in low gears and/or at wide throttle.

Hence there exists a need for an improved engine mount for reducing forces transferred from a drive unit in a vehicle body where at least one tie bar connects the engine and the vehicle body. Further, there exists a need for solving the combined problem of isolating and reducing both vibrations and control of excessive oscillations caused by relatively large engine motions, which if not controlled could exceed the maximum allowable power train rotation.

### DISCLOSURE OF INVENTION

The above problems are solved by a method as claimed in claim 1 and by an arrangement as defined in claim 2..

In the following text, any planes referred to are related to the main axis of a crankshaft in the engine. For an in-line engine, the crankshaft is preferably, but not necessarily located in an intersection between a plane through both the crankshaft and the centre of its associated cylinders. For a V-type engine, including engines with offset rows of cylinders, the crankshaft is preferably, but not necessarily located in an intersection between a plane through both the crankshaft and a bisector between the planes through each bank of associated, in-line cylinders. As an engine may be positioned with its crankshaft at an angle to a horizontal and/or a vertical plane, the axis of the crankshaft is used as a reference. Consequently, the location of various components in the text is related to a vertical and a horizontal virtual plane through said reference axis, irrespective of the type of engine or mounting of the engine in a vehicle. Although the engine mount is mainly described in relation to a passenger vehicle, such as a car, it may also be adapted for other types of vehicles, such as buses and trucks.

The engine referred to in the subsequent text may be either a spark ignition or compression ignition engine, which engine may comprise at least one cylinder with a reciprocating piston connected to a crankshaft. The engine is preferably part of a power train comprising said engine and a transmission, which transmission may be provided with a suitable manual, automated or automatic gearbox. However, the invention may also be applied to an engine not provided with a conventional transmission, such as an engine driving an electric generator in a hybrid vehicle. In the subsequent text the term power train is used as a common term for all such alternatives. Said engine may be mounted with the crankshaft located either in-line or transverse relative to a main longitudinal axis of the vehicle. When describing the said engine, it is assumed that it has a first end, located substantially in an orthogonal plane relative the axis of the crankshaft, and a second end, located at the opposite end of the engine. The crankshaft is preferably, but not necessarily, arranged to exit through said second end, which second end may also be connected to the transmission, or gearbox. The first and second ends are connected by a first and a second side surface, and an upper and a lower surface, making up an engine block. The one or more cylinders are preferably, but not necessarily, located in the upper part of the engine block, while the crankshaft may be located in a crankcase in the lower part of said engine block. When referring to a power train comprising an engine and a gearbox, the first end is identical to the said first end of the engine, while the second end refers to the outer end of the gearbox attached to the opposite end of the engine.

According to a first embodiment the invention relates to an engine mount for reducing vibrational forces between a motor vehicle and a motor vehicle power train, which power train comprises at least an engine having one or more cylinder connected to a crankshaft, wherein said engine mount comprises at least a first damper means and a second damper means, located at either end of said power train and in respective vertical planes parallel to the crankshaft, and at least one controllable tie bar located in a plane substantially transverse to said crankshaft, and an electronic control unit for receiving at least one input signal related to engine motion. The controllable tie bar is provided with means for adjusting the length of said tie bar in response to an output signal from the electronic control unit. Said first and second dampers are arranged for supporting and vibration isolating the engine and gearbox, primarily in a lateral and vertical direction of the engine. As a rule, relatively high frequency engine oscillations will occur around the longitudinal centre of gravity of the engine. Said tie bar is positioned to act as a lever relative to the centre of motion of the engine, which motion primarily occurs around a transverse axis between the first and second dampers to reduce movement around this axis. However, the invention aims to reduce relatively slow engine oscillations, which will occurs around an axis through said first and second damper means. The latter axis is termed the axis of twist in the subsequent text.

The length adjusting means of each of the at least one tie bar is preferably arranged to be adjusted substantially at the same time as an engine motion calculated by the electronic control unit occurs. Consequently, the length adjusting means is arranged to be adjusted to limit a subsequent engine motion as much as possible. The main axis of the length adjusting means must not intersect the axis of twist of the engine or the power train. The controllable tie bar is preferably provided with a relatively soft, resilient bushing at at least one end, preferably at both ends. The length adjusting means allows the use of relatively soft bushings, which in turn allows the tie bars to absorb engine vibrations to a greater extent. The required adjustable length of the respective actuators is dependent on the characteristics of the engine mount and the resilient bushings supporting the controllable tie bar, as well as the available space for deflection of the engine about its axis of twist within an engine compartment or similar.

The controllable tie bar may be provided with a length adjusting means comprising a fluid actuator, such as a hydraulic piston and cylinder arrangement, or an electric actuator. For a fluid actuator, the engine or power train is provided with a pump or compressor as a source of fluid pressure. The supply of fluid pressure is connected to the actuator by means of conduits and suitable valve arrangements, such as solenoid valves, which valves are controlled by the electronic control unit. The response time for the actuator is dependent on the frequency of the vibrations to be reduced, which frequencies may be less than 100 Hz, preferably less than 50 Hz, for the application described here.

According to one embodiment, the at least one controllable tie bar may be located adjacent one end of the engine. Alternatively, the at least one controllable tie bar may be located at any point between said ends, such as in a transverse plane adjacent or through the centre of gravity of the engine. However, when mounted to the said engine the main axis of each tie bar, which axis may coincide with the direction of length adjustment of the respective actuator, should not intersect the axis of twist of the engine or the power train. The location of this axis is determined by the positioning of the attachment points of the first and second dampers at either end of the power train. Consequently, the axis of twist of the engine or the power train may be located at an angle from the axis of the crankshaft, both in the horizontal and vertical direction. The distance between the axis of the at least one tie bar and the axis of twist of the engine is preferably, but not necessarily, selected to be as large as possible, as this distance determines the lever arm with which the tie bar may act on the engine. The tie bars are preferably, but not necessarily mounted between the engine and the vehicle body. Alternative arrangements include mounting the tie bars between the engine and a sub frame, or between a sub frame and the chassis.

According to a further embodiment, a pair of tie bars may be located vertically displaced and in substantially the same vertical plane. Alternatively, the controllable tie bars may be located in adjacent, offset vertical planes.

According to a further embodiment, at least one tie bar may be provided above a horizontal plane located above either of the said first and second dampers. Alternatively, at least one controllable tie bar may be provided below a horizontal plane located below either of the said first and second dampers. In this case, one or more controllable tie bars may be positioned either above or below the said first and second dampers.

According to a further embodiment, a first controllable tie bar is provided above a horizontal plane located above either of the said first and second dampers and a second controllable tie bar is provided below a horizontal plane located below either of the said first and second dampers.

One reason for locating the controllable tie bars above or below a horizontal plane containing either of the first and second dampers is that the axis of twist of the engine or the power train is located between said first and second dampers. A further condition may be that an axis through either of the tie bars must not intersect the rotational axis of the power train.

If multiple controllable tie bars are used, said tie bars may be located on the same or on opposite sides of the engine, relative to a vertical plane through the crankshaft and its associated cylinders, or banks of cylinders, as defined above.

In the above embodiments, the controllable tie bars may be mounted to the engine and the vehicle or supporting structure at one or both of their respective ends by means of suitable dampening elements or resilient bushings, such as rubber bushings. The length adjustment of the controllable tie bars allows said tie bars to be mounted using relatively soft rubber bushings. The hardness of the bushings may be varied for different controllable tie bars. For instance, a tie bar mounted at a greater distance from the axis of rotation of the power train may have to allow a larger deflection than a controllable tie bar mounted at a relatively small distance from said axis. Therefore the first tie bar may require softer bushings than the latter tie bar. By providing relatively soft bushings at either end of each controllable tie bar it is possible to isolate the engine from the chassis and minimise vibrations when the engine is being operated at or near steady state conditions, that is, when there is no relatively little movement of the engine about the axis of twist.

At least one of the first and second damper means may be a passive or active hydraulic damper unit. In addition, at least one of the first and second damper means may be a passive hydraulic bushing. For example, an engine mount provided with an active hydraulic damper unit may comprise a cylinder with two enclosed chambers containing hydraulic fluid, which chambers are separated from each other by a partition containing a damping channel passing there through to permit hydraulic fluid to flow back and forth between the chambers to dampen vibrations imparted to the mount. The engine mount may be equipped with a decoupling unit within one of the hydraulic chambers for coupling and decoupling the damping action of the mount in response to varying driving conditions and engine performance. The decoupling unit has a rigid member forming a cavity into which a flexible diaphragm is deflected when vibrations occur when the decoupling unit is set in a decoupling mode to prevent fluid from being pumped back and forth through the damping channel connecting the said chambers.

The electronic control unit is arranged to receive an input from one or more sensors in order to control the length adjustment of the controllable tie bar. For this purpose, sensors are provided for measuring one or more variables such as throttle valve angle, accelerator pedal position, disconnection position of the clutch, selected gear, vehicle speed, engine speed and/or absolute acceleration of the vehicle body. These input signals may be obtained from existing sensors on the engine, the transmission and/or the vehicle.

Further inputs to the electronic control unit may include signals from one or more sensors for indicating current engine position and/or acceleration. Various types of contacting or non-contacting position sensors and/or accelerometers may be used for this purpose. The electronic control unit may for instance use an engine position sensor for determining the instantaneous position and/or direction of movement of the engine for adjusting the actuator of the controllable tie bar. A closed loop control may be used for monitoring the effect of the said adjustment on the engine position and for performing subsequent adjustments of the actuator to achieve the desired effect, that is, to reduce the power train rotation as much as possible in order to enhance driveability, or at least to maintain the power train rotation within the available deflection limits of the dampening elements or resilient bushings supporting each the controllable tie bar. By using closed loop control and continuous measurement of the current engine position, an electronic control unit can use the input from a single engine position sensor for determining both the instantaneous position, the speed and the acceleration of the power train about the axis of twist. The speed and acceleration may be calculated as the first and second derivatives respectively of the position signal.

In operation, one or more input signals transmitted to the control unit would be used to calculate and predict impending movements of the engine and/or to determine the instantaneous position, direction of movement and acceleration of the engine block. As stated above, this movement is generally termed power train rotation, which rotation is limited by available space in the engine bay and by driveability demands. An example of maximum allowable power train rotation may be an angle of ±5°. This limits the available deflection of the rubber bushings provided for standard non-adjustable tie bars, causing power train noise, particularly when driving in low gears and/or at wide open throttle.

According to the invention, if the control unit determines that a movement of the engine is imminent, or is likely to exceed the available deflection, distance or capacity for damping provided by the dampening elements or resilient bushings provided at one or both ends of each controllable tie bar, then the actuators are actuated. The timing and amount of adjustment is dependent on the size of the calculated or predicted impending movement of the engine. This size may be calculated as a distance or an angle of deflection. The invention allows the control unit to adjust the length of the actuators of the controllable tie bars in a relatively short time interval. In this way the tie bars may be actuated at the same time, or substantially at the same time, as the engine movement occurs, so that engine vibrations may be absorbed by the bushings. At the same time the power train rotation is kept to a minimum or at least within predetermined, acceptable limits. By keeping the said rotation to a minimum the capacity for isolation and vibration damping of the resilient tie bar bushings may be used effectively. Due to the progressive vibration damping properties of the bushings, this capacity will be reduced in relation to an increasing angle of twist. The amount of adjustment may vary for each individual actuator, depending on its location, angle and distance relative to the axis of twist, or rotation, of the engine. Continuous measurement of one or more variables, such as engine position, enables closed loop regulation of the controllable tie bars. As stated above, this allows the controllable tie bars to be mounted using relatively soft rubber bushings. A typical value for the stiffness of a standard bushing may be about 200 N/mm, while a relatively soft bushing may have a stiffness less than 150 N/mm. For the current invention, the stiffness is preferably, but not necessarily, selected in the range 50-150 N/mm. The stiffness of the bushings may be selected dependent on a number of factors, such as length and maximum adjustment range of the tie bar, and the maximum available space in the engine compartment.

In addition it is possible to use at least one controllable tie bar arranged in a substantially vertical direction with respect to the engine arranged tie bar, in order to prevent, or at least minimise, vertical movement of the engine to improve ride comfort.

The invention further relates to a vehicle provided with an engine mount for reducing vibration forces between a motor vehicle and a motor vehicle power train, as described above. Such a vehicle would be provided with one or more controllable tie bar comprising means for adjusting the length of the damper in response to an output signal from an electronic control unit, as described above.

The engine mount according to the invention has the advantage over the prior art of substantially reducing the transmission of drive unit vibration, noise and booming to the motor vehicle and hence improving the driveability, particularly at relatively low engine speed, when engaging and disengaging the clutch or an automatic gearbox and upon load changes. To this end, the engine mount makes it possible to control the vibration reduction characteristics in a manner adapted to prevailing operating conditions.

With the provisions of the invention as disclosed, advantageous further developments of improvements to the engine mount defined by this disclosure are attainable.

The invention will be better understood and further objects and advantages thereof will become more apparent from the subsequent detailed description of a preferred embodiment taken in conjunction with the drawing.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a schematic drawing of a vehicle provided with an engine mounted according to the invention;
- Figure 2: shows an enlarged end view of the engine of Figure 1;
- Figure 3: shows a side view of the power train, as seen front the front of the vehicle;
- Figure 4: shows a plan view of the power train of Figure 3;
- Figure 5: shows an enlarged end view of a controllable tie bar, according to one embodiment of the invention.
- Figure 6: shows a plot of torque acting about the axis of twist of the engine over the amplitude of the bushings supporting the tie bar.

### EMBODIMENTS OF THE INVENTION

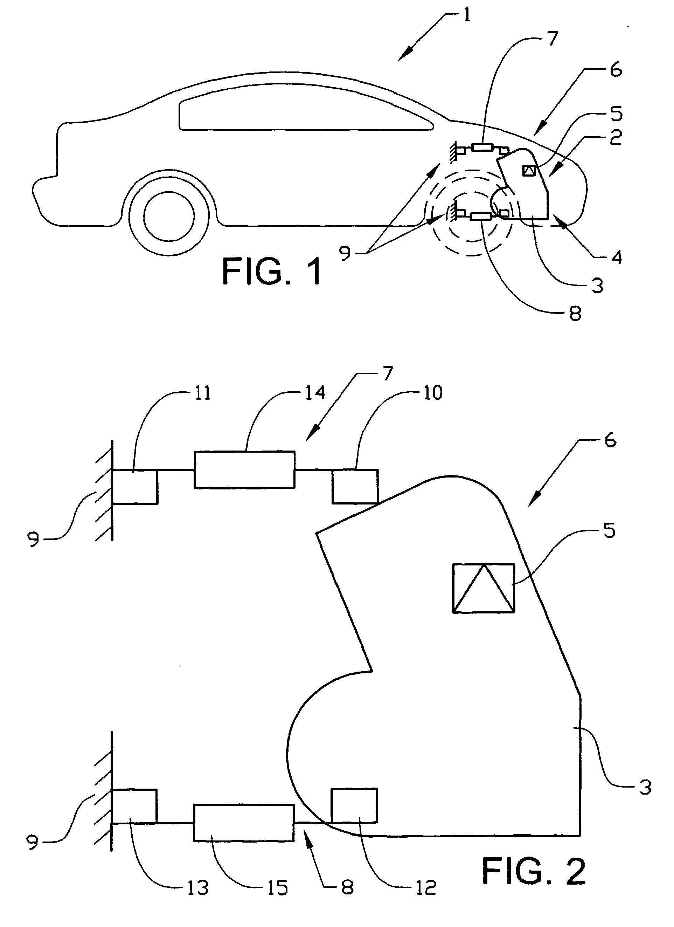

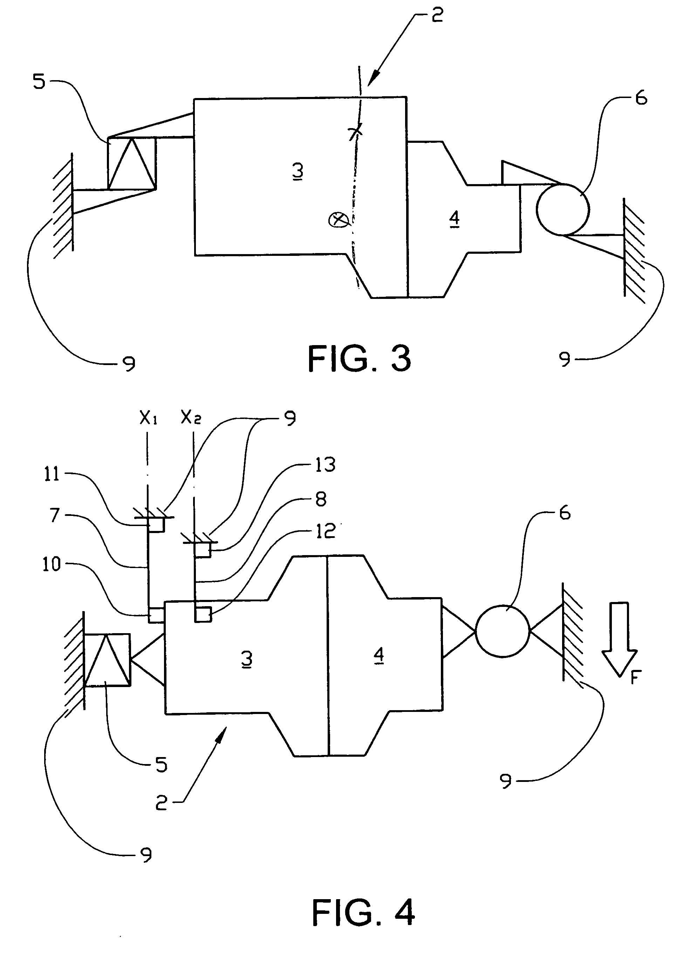

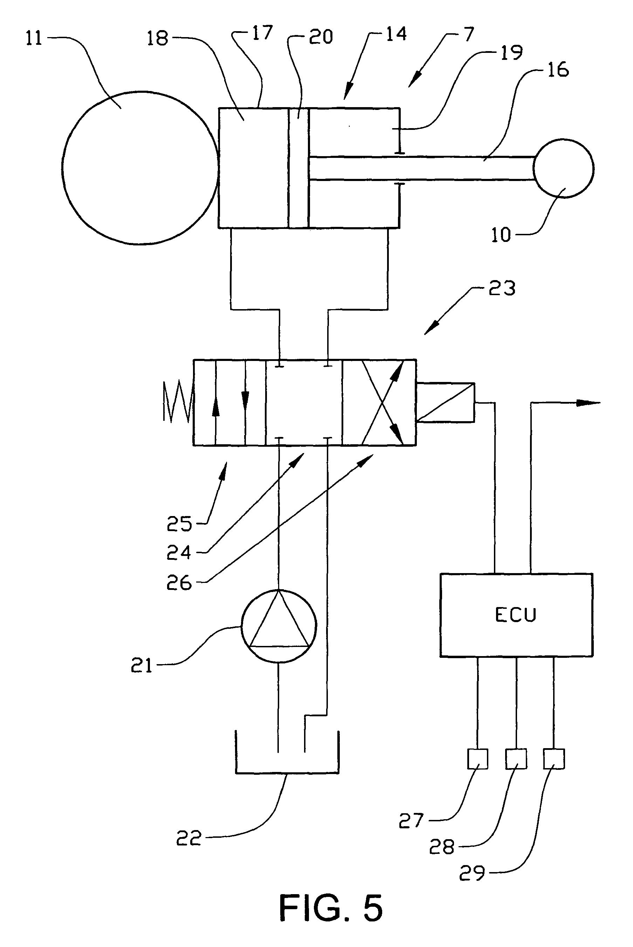

Figure 1 shows a schematic drawing of a vehicle 1 provided with an engine mount according to the invention. The vehicle 1 shown is a front wheel drive vehicle with a transversely mounted power train 2 comprising an engine 3 and a gearbox 4 (see Fig. 3). The engine mount comprises a first damper means 5 and a second damper means 6 (see Fig. 3), located at either end of said power train 2 and in a respective plane parallel to a crankshaft (not shown). The damper means 5, 6 may comprise an active or a passive hydraulic damper. The engine mount further comprises an upper and a lower controllable tie bar 7, 8, attached between a respective upper and lower part of a rear part of the engine 3 and an adjacent section of the vehicle chassis 9. The upper and lower controllable tie bar 7, 8 are located in separate planes, substantially transverse to said crankshaft. Although shown in separate planes in this embodiment, it is also possible to locate the tie bars in the same vertical plane. The controllable tie bar will be described in further detail in connection with Figure 5 below.

Figure 2 shows an enlarged end view of the engine 3 of Figure 1. The figure schematically indicates the first damper means 5, which in this embodiment comprises a passive hydraulic damper unit, connecting a first end of the power train with an adjacent section of the vehicle chassis 9 (see Figure 3).

Alternatively, the damper means bar may comprise active or passive elements with or without elastic elements. An active element may comprise a controllable hydraulic damper unit with an adjustable spring rate.

The upper controllable tie bar 7 is mounted in a first rubber bushing 10 connected to an upper part of the engine 3, above the first and second damper means 5, 6, and in a second rubber bushing 11 connected to the chassis 9. Similarly, the lower controllable tie bar 8 is mounted in a first rubber bushing 12 connected to a lower part of the engine 3, below the first and second damper means 5, 6, and in a second rubber bushing 13 connected to the chassis 9. The upper and lower controllable tie bar 7, 8 are each provided with a hydraulic actuator 14, 15 for adjusting the length of said tie bar 7, 8. The hydraulic actuators 14, 15 are controlled by an electronic control unit ECU (see Figure 5).

Figure 3 shows a side view of the power train 2, as seen from the front of the vehicle 1. As can be seen in the figure, the power train 2 comprises the engine 3 and the gearbox 4. The engine mount comprises a first damper means 5 connecting a first end of the power train 2 to the chassis 9 on one side of the vehicle. Similarly, a second damper means 6 connects a second end of the power train 2 to the chassis 9 on the opposite side of the vehicle.

Figure 4 shows a plan view of the power train 2 of Figure 3. In addition to the first damper means 5 and second damper means 6, connecting opposite ends of the power train 2 to the chassis 9, this figure shows the location of the upper and lower controllable tie bars 7, 8. The upper controllable tie bar 7, connecting an upper part of the engine 3 to the chassis 9, is located in a first vertical plane X₁ adjacent the first end of the power train 2. The lower controllable tie bar 8, connecting a lower part of the engine 3 to the chassis, is located in a second vertical plane X₂ , located in or adjacent the first vertical plane X₁. According to the embodiment of Figure 4, relating to a transverse, four-cylinder engine, the offset between the first and second vertical planes X₁ and X₂ may be selected in the range 0-200 mm.

As can be seen from Figure 4, the upper controllable tie bar 7 is longer than the lower controllable tie bar 8. The total length of the respective tie bar is dependent on the relative lever arm, that is, the minimum distance between the main axis of the tie bar and the axis of twist of the engine. The adjustable length of the respective controllable tie bar 7, 8 is dependent on factors such as the resilient properties of the rubber bushings 10-13, a maximum desired or required length of adjustment, and/or the lever arm of each tie bar relative to the axis of twist of the power train 2. The said lever arm corresponds to the shortest distance between the axis coinciding with the direction of length adjustment of the respective actuator 14, 15 (see Fig.2) and the axis of twist of the power train 2, in a plane at right angles to the axis of twist. The above properties are selected for each individual type of engine in order to keep the power train rotation within allowable limits.

The above embodiments describe an arrangement where both controllable tie bars are located in offset vertical planes on the same side of the engine.

Alternative arrangements may include both controllable tie bars located in the same or adjacent offset planes on opposite sides of an upper or a lower part of the engine, positioned either substantially level with or diagonally opposite each other. This allows for greater freedom with respect to the packing requirements of different engines.

Figure 5 shows an enlarged schematic illustration of a controllable tie bar, such as the upper controllable tie bar 7. The said tie bar 7 is connected to the engine 3 (not shown) by a first rubber bushing 10 and to the chassis 9 (not shown) by a second rubber bushing 11. A length adjustable hydraulic actuator 14 provided between the rubber bushings 10, 11 comprises a piston and cylinder unit, wherein a piston rod 16 extending from one end of the cylinder 17 is attached to the first rubber bushing 10. The cylinder 17 is attached to the second rubber bushing 11 at the opposite end of the cylinder. The cylinder 17 is divided into two separate chambers 18, 19 by a piston 20, which chambers can be alternately connected to a supply of hydraulic pressure 21, such as a pump, or to a drain 22. The supply of hydraulic pressure is controlled by a solenoid valve 23 that may be switched between three distinct positions 24, 25, 26 by an electronic control unit, or ECU. In a first position 24 both chambers 18, 19 in the cylinder are cut off from both supply 21 and drain 22. In this position the controllable tie bar 7 functions as a fixed strut. In a second position 25, a first chamber 18 is connected to the supply 21 and a second chamber 19 is connected to the drain 22. In this position the controllable tie bar 7 will be extended until it attains a length determined by the ECU, at which time the solenoid valve 23 will return to its first position 24. In a third position 26, the second chamber 18 is connected to the supply 21 and the first chamber 19 is connected to the drain 22. In this position the controllable tie bar 7 will be retracted until it attains a length determined by the ECU, at which time the solenoid valve 23 will return to its first position 24.

The solenoid valve shown in Figure 5 may of course be replaced by one or more alternative valves performing the same function, for instance a proportional valve. The fluid circuit is arranged to supply and/or drain a fluid actuator, which circuit may be designed in a number of different ways for this purpose. Also, the same or multiple sources of fluid pressure may be used for supplying the actuators with pressure. Hence, the design of the fluid circuit may be varied freely within the scope of the invention.

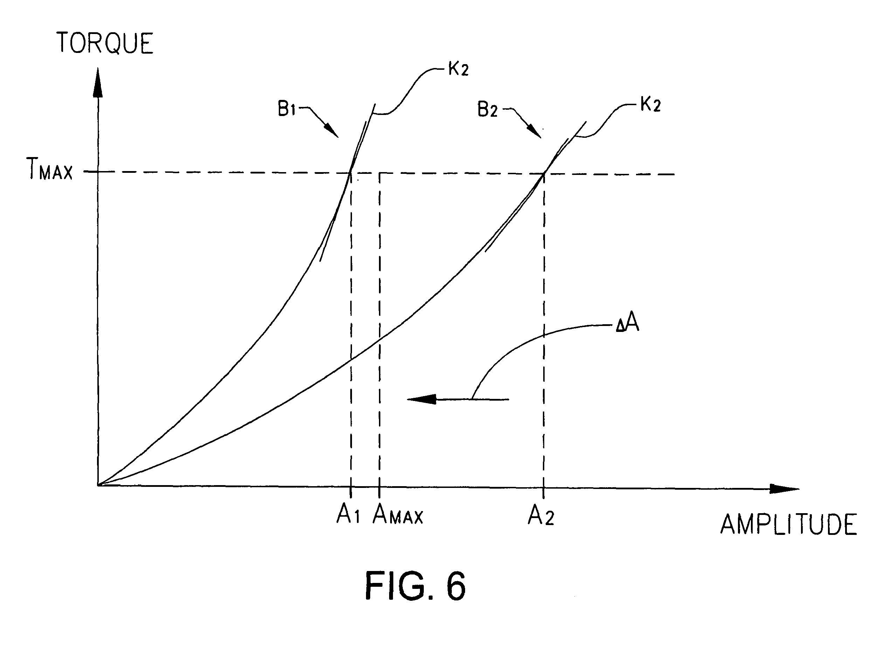

The electronic control unit ECU is arranged to receive a number of input signals related to engine motion. The length of the controllable tie bar is then adjusted in response to an output signal from the electronic control unit. This length adjustment of the tie bar will be described in further detail in connection with Figure 6 below. In the current embodiment, the electronic control unit ECU is arranged to receive input signals from a sensor for indicating current engine position 27 and a sensor for indicating the current acceleration of the power train 28 about the axis of twist. The electronic control unit ECU uses the input from the engine position sensor 27 for determining the instantaneous position of the engine and the input from the acceleration sensor 28 to determine the direction and speed of the twisting movement of the power train. These data allows the electronic control unit ECU to calculate the length adjustment required by the actuators 14, 15 of the controllable tie bars 7, 8 to minimize the power train rotation, or at least maintain the rotation within the available deflection limits of the rubber bushings 10-13. The electronic control unit ECU is arranged to control the upper and lower controllable tie bars 7, 8 simultaneously to achieve the desired effect. In order to perform such adjustments effectively, the reaction time for the operation must be kept within a relatively short time interval. A closed loop control is used for monitoring the effect of the said adjustment on the engine position and for performing subsequent adjustments of the actuator to reduce the power train rotation as much as possible.

According to the example described above, the time taken from the real time calculation of an imminent power train movement in response to an input signal to the end of an actuator control cycle in response to an output signal is less than 0,05 seconds, preferably about 0,025 seconds.

This time will of course vary depending on the capacity of the processor (CPU) used in the electronic control unit, the size of the engine, the number, type and size of actuators used and the properties of the resilient bushings.

According to a further alternative, a closed loop regulation is used for monitoring the effect of the said adjustment on the engine position and for performing subsequent adjustments of the actuator to achieve the desired effect. By using closed loop regulation and continuous measurement of the current engine position, the electronic control unit ECU can use the input from a single engine position sensor 27 for determining both the instantaneous position and the acceleration of the power train about the axis of twist.

The engine position can be obtained by measuring the actual position of the engine using a sensor. Alternatively it is obtained by calculating the position by means of at least one measured tie bar length and known values for tie bar bushing deformation associated with calculated or sensed current values of speed and/or acceleration of the engine about the axis of twist. In the latter case, values of bushing deformation are stored in a map in the electronic control unit ECU. The combined values of measured tie bar length a current tie bar bushing deformation gives the actual length of the tie bar at any given time. Said values may also be obtained by testing or modelling the system.

As indicated in Figure 5, at least one further alternative sensor 29 can be used to provide an additional input signal for enabling the electronic control unit ECU to calculate the length adjustment required by the actuators. One or more sensors can be provided for measuring or sensing one or more variables such as throttle valve angle, accelerator pedal position, disconnection position of the clutch, selected gear, automatic gearbox gear change signals, vehicle speed, engine speed and/or absolute acceleration of the vehicle body. These input signals may be obtained from existing sensors on the engine or the vehicle.

In operation the electronic control unit ECU receives input signals from one or more sensors as listed above, which signals are processed continuously. If it is determined that an engine movement that will exceed the allowable power train rotation limit is imminent, then an output signal corresponding to a calculated length adjustment is transmitted to the controllable tie bars. Depending on the position of the tie bars in relation to the direction of impending engine movement and the current tie bar bushing deformation, the actuator of the relevant tie bar or tie bars is extended or retracted to "catch" the engine. In this way the subsequent movement of the engine is restricted and its acceleration and rotation angle is minimized or at least reduced to a level that is acceptable. In the embodiment shown in Figure 5, one controllable tie bar would be extended, while the other would be retracted depending on the direction of rotation. The behaviour of such a system may be optimised with respect to driveability.

Figure 6 illustrates a schematically how a tie bar according to the invention, provided with relatively soft rubber bushings, is adjusted to "catch" an engine. The diagram of Figure 6 is a plot of torque acting about the axis of twist of the engine over the amplitude of the bushings supporting the tie bar. Here, the amplitude is equal to the distance a bushing at one end of a tie bar will be deformed by an applied torque. As can be seen from the diagram, the bushings are progressive, in that the resistance to deformation increases with increasing torque.

A first curve B₁ shows the characteristics of a standard, relatively hard bushing, which at a maximum torque Tₘₐₓ will have an amplitude A₁ as the bushing deforms. At this point the spring rate K₁ of the bushing is represented by a tangent to the curve B₁ at the intersection of Tₘₐₓ and A₁. A second curve B₂ shows the characteristics of a relatively soft bushing, which at a maximum torque Tₘₐₓ will have an amplitude A₂ as the bushing deforms. At this point the spring rate K₂ of the bushing is represented by a tangent to the curve B₂ at the intersection of T_{maX} and A₂.

Although the spring rate k₂ of the softer bushing will allow an improved vibration absorption, the amplitude A₂ under maximum torque Tₘₐₓ will exceed the maximum allowed amplitude Aₘₐₓ, corresponding to the maximum allowable power train rotation. In order to avoid A₂ from exceeding Aₘₐₓ, the length of the tie bar is adjusted as the torque is applied, that is, as the engine moves. This adjustment, as indicated by the arrow ΔA, will bring the actual amplitude below the maximum amplitude Aₘₐₓ. In this particular case, the length of the tie bar can be adjusted by extending it over a distance ΔA = (A₂ - A₁) to prevent the amplitude otherwise allowed by the bushing from exceeding the maximum value.

The diagram in Figure 6 schematically shows the behaviour of a tie bar bushing according to the invention under maximum load, where it is necessary to maintain the amplitude of the bushing within a maximum value corresponding to the maximum angle of twist. This value is determined by the available space in the engine compartment, as described above. However, under less severe conditions the arrangement according to the invention will attempt to minimize engine rotation.

The embodiment shown in Figures 1-4 describes an engine mount for a transverse engine in a front wheel drive vehicle. However, the engine mount may easily be adapted for in-line engines, mid-mounted engines or similar. In the case of engines with the crankshaft arranged parallel to the longitudinal axis of the vehicle, the engine need only be rotated anti-clockwise through 90° relative to the arrangement shown in Figure 4.

The invention is not limited to the embodiments described above and may be varied freely within the scope of the appended claims.

## Claims

1. Method for controlling an arrangement for reducing vibration between a motor vehicle and a motor vehicle power train (3, 4), which arrangement comprises a power train (3, 4) including an engine (3, 4) having at least one cylinder connected to a crankshaft and an electronic control unit (ECU) for receiving at least one input signal related to a power train rotation, and a controllable engine mount, wherein said engine mount comprises at least a first damper means and a second damper means, located at either end of said power train (3, 4) and in respective vertical planes parallel to the crankshaft, and at least one controllable tie bar (7, 8) located in a plane substantially transverse to said crankshaft, **characterized in that** the method involves the steps of
- determining that an engine movement in excess of a maximum power train rotation limit is imminent,
- transmitting an output signal from the electronic control unit (ECU) prior to said engine movement, and
- adjusting the length of the controllable tie bar (7, 8) in response said signal during said engine movement in order to maintain the power train rotation within said limit.

2. Arrangement for reducing vibration between a motor vehicle and a motor vehicle power train (3, 4), which arrangement comprises a power train (3, 4) including an engine (3, 4) having at least one cylinder connected to a crankshaft, an electronic control unit (ECU) for receiving at least one input signal related to a power train rotation, and a controllable engine mount, wherein said engine mount comprises at least a first damper means and a second damper means, located at either end of said power train (3, 4) and in respective vertical planes parallel to the crankshaft, and at least one controllable tie bar (7, 8) located in a plane substantially transverse to said crankshaft, **characterized in that** the electronic control unit (ECU) is provided with means for determining that an engine movement in excess of a maximum power train rotation limit is imminent, and that said controllable tie bar (7, 8) is provided with means (14, 15) for adjusting the length of the tie bar (7, 8) in response to an output signal from the electronic control unit (ECU) transmitted prior to said engine movement, in order to maintain the power train rotation within said limit.

3. Arrangement according to claim 2, **characterized in that** the controllable tie bar (7, 8) is provided with length adjusting means (14, 15) for adjusting the length of the tie bar (7, 8) substantially at the same time as the power train rotation occurs.

4. Arrangement according to claim 3, **characterized in that** the controllable tie bar (7, 8) is provided with length adjusting means (14, 15) for adjusting the length of the tie bar (7, 8) in response to the power train rotation, in order to minimize rotation about the axis of twist of the power train.

5. Arrangement according to any one of the above claims, **characterized in that** each end of the at least one tie bar (7, 8) is mounted in resilient bushings.

6. Arrangement according to claim 5, **characterized in that** the resilient bushings have a hardness less than 150 N/mm.

7. Arrangement according to any one of the above claims, **characterized in that** the input signal related to a power train rotation is an engine position signal.

8. Arrangement according to any one of the above claims, **characterized in that** the at least one input signals related to a power train rotation is a derivative of an engine position signal.

9. Arrangement according to any one of claims 2-8, **characterized in** at least one input signals related to a power train rotation is a signal from a tie bar (7, 8) length sensor and a stored value for current tie bar (7, 8) bushing deformation.

10. Arrangement according to claim 9, **characterized in that** values for current tie bar (7, 8) bushing deformation are stored as a map in the electronic control unit (ECU).

11. Arrangement according to any one of the above claims, **characterized in that** the length adjusting means (14, 15) comprises a fluid actuator.

12. Arrangement according to any one of the above claims, **characterized in that** the length adjusting means (14, 15) comprises an electric actuator.

13. Arrangement according to any one of the above claims, **characterized in that** the axis of the at least one controllable tie bar (7, 8) is located with a lever arm about the axis of twist of the engine.

14. Arrangement according to claim 13, **characterized in that** at least one controllable tie bar (7, 8) is located adjacent a vertical plane through the centre of gravity of the engine

15. Arrangement according to claim 13, **characterized in that** a pair of controllable tie bars are located in substantially the same vertical plane or in offset vertical planes.

16. Arrangement according to claim 13, **characterized in that** at least one controllable tie bar (7, 8) is provided above or below a horizontal plane through either of the said first and second dampers

17. Arrangement according to claim 13, **characterized in that** a first controllable tie bar (7, 8) is provided above a horizontal plane located above either of the said first and second dampers and a second controllable tie bar (7, 8) is provided below a horizontal plane located below either of the said first and second dampers.

18. Arrangement according to any one of claims 2-9. **characterized in in that** the electronic control unit (ECU) is arranged to receive an input from one or more sensors for measuring at least one of the following detected variables:
• throttle valve angle
• gas pedal deflection
• disconnection position of the coupling
• gear engaged
• vehicle speed
• engine speed
• absolute acceleration of the vehicle body.

19. Vehicle provided with an arrangement according to claim 2, for reducing vibration forces between a motor vehicle and a motor vehicle power train.

## Patentansprüche

1. Verfahren zum Steuern einer Anordnung zum Reduzieren von Vibrationen zwischen einem Kraftfahrzeug und einem Kraftfahrzeugantriebsstrang (3, 4), wobei die Anordnung einen Antriebsstrang (3, 4) mit einem Motor (3, 4), der mindestens einen mit einer Kurbelwelle verbundenen Zylinder, und eine elektronische Steuereinheit (ECU) zum Empfangen mindestens eines mit einer Drehbewegung des Antriebsstrangs in Beziehung stehenden Eingangssignals aufweist, und eine steuerbare Motorhalterung aufweist, wobei die Motorhalterung mindestens eine erste Dämpfungseinrichtung und eine zweite Dämpfungseinrichtung, die jeweils an einem Ende des Antriebsstrangs (3, 4) und in jeweiligen vertikalen Ebenen angeordnet sind, die sich parallel zur Kurbelwelle erstrecken, und mindestens eine steuerbare Verbindungsstange (7, 8) aufweist, die in einer Ebene angeordnet sind, die sich im Wesentlichen quer zur Kurbelwelle erstreckt;
**dadurch gekennzeichnet, dass** das Verfahren die Schritte aufweist:
Bestimmen, dass eine Motorbewegung bevorsteht, die einen maximalen Drehbewegungsgrenzwert des Antriebsstrangs überschreitet;
Übertragen eines Ausgangssignals von der elektronischen Steuereinheit (ECU) vor Auftreten der Motorbewegung;
Einstellen der Länge der steuerbaren Verbindungsstange (7, 8) in Antwort auf das Signal während der Motorbewegung, um die Drehbewegung des Antriebsstrangs innerhalb des Grenzwerts zu halten.

2. Anordnung zum Reduzieren von Vibrationen zwischen einem Kraftfahrzeug und einem Kraftfahrzeugantriebsstrang (3, 4), wobei die Anordnung einen Antriebsstrang (3, 4) mit einem Motor (3, 4), der mindestens einen mit einer Kurbelwelle verbundenen Zylinder aufweist, eine elektronische Steuereinheit (ECU) zum Empfangen mindestens eines mit einer Drehbewegung des Antriebsstrangs in Beziehung stehenden Eingangssignals und eine steuerbare Motorhalterung aufweist, wobei die Motorhalterung mindestens eine erste Dämpfungseinrichtung und eine zweite Dämpfungseinrichtung, die jeweils an einem Ende des Antriebsstrangs (3, 4) und in jeweiligen vertikalen Ebenen angeordnet sind, die sich parallel zur Kurbelwelle erstrecken, und mindestens eine steuerbare Verbindungsstange (7, 8) aufweist, die in einer Ebene angeordnet sind, die sich im Wesentlichen quer zur Kurbelwelle erstreckt; **dadurch gekennzeichnet, dass** die elektronische Steuereinheit (ECU) eine Einrichtung aufweist, die dazu geeignet ist, zu bestimmen, dass eine Motorbewegung bevorsteht, die einen maximalen Drehbewegungsgrenzwert des Antriebsstrangs überschreitet, und dass die steuerbare Verbindungsstange (7, 8) eine Einrichtung (14, 15) zum Einstellen der Länge der Verbindungsstange (7, 8) in Antwort auf ein Ausgangssignal der elektronischen Steuereinheit (ECU) aufweist, das übertragen wird, bevor die Motorbewegung auftritt, um die Drehbewegung des Antriebsstrangs innerhalb des Grenzwerts zu halten.

3. Anordnung nach Anspruch 2, **dadurch gekennzeichnet, dass** die steuerbare Verbindungsstange (7, 8) eine Längeneinstellungseinrichtung (14, 15) aufweist, die dazu geeignet ist, die Länge der Verbindungsstange (7, 8) im Wesentlichen zur gleichen Zeit einzustellen, zu der die Drehbewegung des Antriebsstrangs auftritt.

4. Anordnung nach Anspruch 3, **dadurch gekennzeichnet, dass** die steuerbare Verbindungsstange (7, 8) eine Längeneinstellungseinrichtung (14, 15) aufweist, die dazu geeignet ist, die Länge der Verbindungsstange (7, 8) in Antwort auf eine Drehbewegung des Antriebsstrangs einzustellen, um eine Drehbewegung um die Drehachse des Antriebsstrangs zu minimieren.

5. Anordnung nach einem der vorangehenden Ansprüche, **dadurch gekennzeichnet, dass** jedes Ende der mindestens einen Verbindungsstange (7, 8) in elastischen Lagerbuchsen gehalten wird.

6. Anordnung nach Anspruch 5, **dadurch gekennzeichnet, dass** die elastischen Lagerbuchsen eine Härte von weniger als 150 N/mm aufweisen.

7. Anordnung nach einem der vorangehenden Ansprüche, **dadurch gekennzeichnet, dass** das mit einer Drehbewegung des Antriebsstrangs in Beziehung stehende Eingangssignal ein Motorpositionssignal ist.

8. Anordnung nach einem der vorangehenden Ansprüche, **dadurch gekennzeichnet, dass** das mindestens eine mit einer Drehbewegung des Antriebsstrangs in Beziehung stehende Eingangssignal vom Motorpositionssignal abgeleitet wird.

9. Anordnung nach einem der Ansprüche 2 bis 8, **dadurch gekennzeichnet, dass** mindestens ein mit einer Drehbewegung des Antriebsstrangs in Beziehung stehendes Eingangssignal durch ein Signal von einem Längensensor der Verbindungsstange (7, 8) und einen gespeicherten Wert für eine aktuelle Verformung der Lagerbuchse der Verbindungsstange (7, 8) erhalten wird.

10. Anordnung nach Anspruch 9, **dadurch gekennzeichnet, dass** Werte für die aktuelle Verformung der Lagerbuchse der Verbindungsstange (7, 8) in der elektronischen Steuereinheit (ECU) als Kennfeld gespeichert sind.

11. Anordnung nach einem der vorangehenden Ansprüche, **dadurch gekennzeichnet, dass** die Längeneinstellungseinrichtung (14, 15) ein Fluidstellglied aufweist.

12. Anordnung nach einem der vorangehenden Ansprüche, **dadurch gekennzeichnet, dass** die Längeneinstellungseinrichtung (14, 15) ein elektrisches Stellglied aufweist.

13. Anordnung nach einem der vorangehenden Ansprüche, **dadurch gekennzeichnet, dass** die Achse der mindestens einen steuerbaren Verbindungsstange (7, 8) mit einem Hebelarm um die Drehachse des Motors angeordnet ist.

14. Anordnung nach Anspruch 13, **dadurch gekennzeichnet, dass** mindestens eine steuerbare Verbindungsstange (7, 8) benachbart zu einer vertikalen Ebene angeordnet ist, die sich durch den Schwerpunkt des Motors erstreckt.

15. Anordnung nach Anspruch 13, **dadurch gekennzeichnet, dass** ein Paar steuerbarer Verbindungsstangen (7, 8) im Wesentlichen in der gleichen vertikalen Ebene oder in versetzten vertikalen Ebenen angeordnet ist.

16. Anordnung nach Anspruch 13, **dadurch gekennzeichnet, dass** mindestens eine steuerbare Verbindungsstange (7, 8) über oder unter einer horizontalen Ebene angeordnet ist, die sich durch die erste und die zweite Dämpfungseinrichtung erstreckt.

17. Anordnung nach Anspruch 13, **dadurch gekennzeichnet, dass** eine erste steuerbare Verbindungsstange (7, 8) über einer horizontalen Ebene angeordnet ist, die über der ersten und der zweiten Dämpfungseinrichtung angeordnet ist, und eine zweite steuerbare Verbindungsstange (7, 8) unter einer horizontalen Ebene angeordnet ist, die unter der ersten und der zweiten Dämpfungseinrichtung angeordnet ist.

18. Anordnung nach einem der Ansprüche 2 bis 9, **dadurch gekennzeichnet, dass** die elektronische Steuereinheit (ECU) dazu geeignet ist, ein Eingangssignal von einem oder mehreren Sensoren zum Messen mindestens einer der folgenden Erfassungsvariablen zu empfangen:
• Drosselklappenwinkel
• Beschleunigungspedalbetätigungsgrad
• Ausrückposition der Kupplung
• eingelegter Gang
• Fahrzeuggeschwindigkeit
• Motordrehzahl
• Absolutbeschleunigung der Fahrzeugkarosserie.

19. Fahrzeug mit einer Anordnung nach Anspruch 2 zum Reduzieren von Vibrationskräften zwischen einem Kraftfahrzeug und einem Kraftfahrzeugantriebsstrang.

## Revendications

1. Procédé de commande d'un arrangement permettant de réduire la vibration entre un véhicule à moteur et un train de transmission (3, 4) de véhicule à moteur, cet arrangement comprenant un train de transmission (3, 4) comportant un moteur (3, 4) contenant au moins un cylindre, relié à un vilebrequin et une unité de commande électronique (ECU pour *electronic control unit*) permettant de recevoir au moins un signal d'entrée correspondant à une rotation de train de transmission, et un bâti contrôlable de moteur, ledit bâti de moteur comprenant au moins un premier moyen d'amortissement et un deuxième moyen d'amortissement, situés à l'une des extrémités dudit train de transmission (3, 4) et dans des plans verticaux respectifs parallèles au vilebrequin, et au moins une barre contrôlable de fixation (7, 8) située dans un plan pratiquement transversal audit vilebrequin, ce procédé **se caractérisant par** les étapes consistant à :
- déterminer si un mouvement du moteur présentant un dépassement d'une limite maximale de rotation du train de transmission est imminent
- transmettre un signal de sortie à partir de l'unité de commande électronique (ECU) avant ledit mouvement du moteur, et
- ajuster la longueur de la barre contrôlable de fixation (7, 8) en réponse audit signal pendant ledit mouvement du moteur, afin de maintenir la rotation du train de transmission au-dessous de ladite limite.

2. Arrangement permettant de réduire les vibrations entre un véhicule à moteur et un train de transmission (3, 4) de véhicule à moteur, cet arrangement comprenant un train de transmission (3, 4) comportant un moteur (3, 4) contenant au moins un cylindre relié à un vilebrequin, une unité de commande électronique (ECU) permettant de recevoir au moins un signal d'entrée correspondant à une rotation de train de transmission et un bâti contrôlable de moteur, ledit bâti de moteur comprenant au moins un premier moyen d'amortissement et un deuxième moyen d'amortissement, situés à l'une des extrémités dudit train de transmission (3, 4) et dans des plans verticaux respectifs parallèles au vilebrequin, et au moins une barre contrôlable de fixation (7, 8) située dans un plan pratiquement transversal audit vilebrequin, **caractérisé en ce que** l'unité de commande électronique (ECU) est dotée d'un moyen permettant de déterminer si le mouvement du moteur est sur le point de dépasser une limite maximale de rotation de train de transmission, et **en ce que** ladite barre contrôlable de fixation (7, 8) est dotée d'un moyen (14, 15) permettant d'ajuster la longueur de la barre de fixation (7, 8) en réponse à un signal de sortie issu de l'unité de commande électronique (ECU), transmis avant ledit mouvement de moteur, afin de maintenir la rotation du train de transmission au-dessous de ladite limite.

3. Arrangement selon la revendication 2, **caractérisé en ce que** la barre contrôlable de fixation (7, 8) est dotée d'un moyen (14, 15) d'ajustement permettant d'ajuster la longueur de la barre de fixation (7, 8) sensiblement au moment où la rotation du train de transmission se produit.

4. Arrangement selon la revendication 3, **caractérisé en ce que** la barre contrôlable de fixation (7, 8) est dotée d'un moyen (14, 15) d'ajustement permettant d'ajuster la longueur de la barre de fixation (7, 8) en réponse à la rotation du train de transmission, afin de réduire la vitesse de rotation autour de l'axe de torsion du train de transmission.

5. Arrangement selon l'une quelconque des revendications précédentes, **caractérisé en ce que** chaque extrémité de la au moins une barre de fixation (7, 8) est montée dans des manchons résilients.

6. Arrangement selon la revendication 5, **caractérisé en ce que** les manchons résilients présentent une dureté inférieure à 150 N/mm.

7. Arrangement selon l'une quelconque des revendications précédentes, **caractérisé en ce que** le signal d'entrée correspondant à une rotation de train de transmission est un signal relatif à la position du moteur.

8. Arrangement selon l'une quelconque des revendications précédentes, **caractérisé en ce que** l'au moins un signal d'entrée correspondant à une rotation de train de transmission est un signal dérivé d'un signal relatif à la position du moteur.

9. Arrangement selon l'une quelconque des revendications 2 à 8, **caractérisé en ce qu'**au moins un signal d'entrée correspondant à une rotation de train de transmission est un signal issu d'un capteur de longueur de barre de fixation (7, 8) et une valeur stockée pour la déformation en cours de manchon de barre de fixation (7, 8).

10. Arrangement selon la revendication 9, **caractérisé en ce que** les valeurs correspondant à la déformation en cours de manchon de barre de fixation (7, 8) sont stockées sous forme de carte dans l'unité de commande électronique (ECU).

11. Arrangement selon l'une quelconque des revendications précédentes, **caractérisé en ce que** le moyen (14, 15) d'ajustement de la longueur comprend un actionneur fluidique.

12. Arrangement selon l'une quelconque des revendications précédentes, **caractérisé en ce que** le moyen (14, 15) d'ajustement de la longueur comprend un actionneur électrique.

13. Arrangement selon l'une quelconque des revendications précédentes, **caractérisé en ce que** l'axe de l'au moins une barre contrôlable de fixation (7, 8) est doté d'un bras de levier autour de l'axe de torsion du moteur.

14. Arrangement selon la revendication 13, **caractérisé en ce qu'**au moins une barre contrôlable de fixation (7, 8) est positionnée à proximité d'un plan vertical passant par le centre de gravité du moteur.

15. Arrangement selon la revendication 13, **caractérisé en ce qu'**une paire de barres contrôlables de fixation est positionnée dans pratiquement le même plan vertical ou dans des plans verticaux décalés.

16. Arrangement selon la revendication 13, **caractérisé en ce qu'**au moins une barre contrôlable de fixation (7, 8) est fournie au-dessus ou au-dessous d'un plan horizontal traversant l'un ou l'autre desdits premier et deuxième amortisseurs.

17. Arrangement selon la revendication 13, **caractérisé en ce qu'**une première barre contrôlable de fixation (7, 8) est fournie au-dessus d'un plan horizontal situé au-dessus de l'un ou l'autre desdits premier et deuxième amortisseurs, et **en ce qu'**une deuxième barre contrôlable de fixation (7, 8) est fournie au-dessous d'un plan horizontal situé au-dessous de l'un ou l'autre desdits premier et deuxième amortisseurs.

18. Arrangement selon l'une quelconque des revendications 2 à 9, **caractérisé en ce que** l'unité de commande électronique (ECU) est conçue pour recevoir une entrée d'un ou de plusieurs capteurs, afin de mesurer au moins l'une des variables détectées suivantes :
• l'angle du papillon des gaz
• la déflection de pédale d'accélération,
• la position de déconnexion du couplage,
• le rapport de vitesse engagé,
• la vitesse du véhicule,
• la vitesse de rotation du moteur,
• l'accélération absolue de la carrosserie du véhicule.

19. Véhicule doté d'un arrangement conforme à la revendication 2, permettant de réduire les forces de vibration entre un véhicule à moteur et un train de transmission de véhicule à moteur.
